(19) Europäisches Patentamt
European Patent Office
Office européen des brevets

(11) **EP 4 648 363 A1**

(12) **EUROPEAN PATENT APPLICATION**

(43) Date of publication:
**12.11.2025 Bulletin 2025/46**

(21) Application number: **25174075.9**

(22) Date of filing: **02.05.2025**

(51) International Patent Classification (IPC):
**H04L 25/02** (2006.01)   **H04W 84/12** (2009.01)
**H04B 7/06** (2006.01)

(52) Cooperative Patent Classification (CPC):
**H04L 25/0222; H04W 84/12; H04B 7/0663**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.05.2024 US 202418659818**

(71) Applicant: **NXP USA, Inc.**
**Austin, TX 78735 (US)**

(72) Inventors:
• **CHENG, Xilin**
  **5656AG Eindhoven (NL)**

• **CAO, Rui**
  **5656AG Eindhoven (NL)**
• **BERGER, Christian Raimund**
  **5656AG Eindhoven (NL)**
• **ZHANG, Hongyuan**
  **5656AG Eindhoven (NL)**
• **ZHENG, Xiayu**
  **5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **SYSTEM AND METHOD FOR WIRELESS CHANNEL CHANGE DETECTION**

(57) Embodiments of a method and apparatus for wireless communications are disclosed. In an embodiment, a wireless device includes a wireless transceiver configured to obtain prior channel state information (CSI) and current CSI and a controller configured to construct a nulling matrix using the prior CSI and to apply the nulling matrix to the current CSI to generate a perturbation index value that quantifies a wireless channel change.

FIG. 4

EP 4 648 363 A1

## Description

BACKGROUND

Wireless communications devices, e.g., access points (APs) or non-AP devices can transmit various types of information using different transmission techniques. For example, various applications, such as, Internet of Things (IoT) applications can conduct wireless local area network (WLAN) communications, for example, based on Institute of Electrical and Electronics Engineers (IEEE) 802.11 family of standards (e.g., Wi-Fi standards). Some applications, for example, video teleconferencing, streaming entertainment, high definition (HD) video surveillance applications, outdoor video sharing applications, etc., require relatively high system throughput. Wireless channel state information (CSI) of a wireless system may be high-dimensional. A wireless channel change, which may be caused by a motion change or an environmental change, can trigger changes in wireless channel state information (CSI). Because wireless channel state information may be high-dimensional, quantifying the channel change between prior and current channel state information can be challenging.

SUMMARY

Embodiments of a method and apparatus for wireless communications are disclosed. In an embodiment, a wireless device includes a wireless transceiver configured to obtain prior channel state information (CSI) and current CSI and a controller configured to construct a nulling matrix using the prior CSI and to apply the nulling matrix to the current CSI to generate a perturbation index value that quantifies a wireless channel change. Other embodiments are also disclosed.

In an embodiment, the controller is further configured to construct the nulling matrix using the prior CSI depending on a spatial domain configuration of the prior CSI.

In an embodiment, the controller is further configured to construct the nulling matrix using the prior CSI depending on whether the prior CSI is in frequency domain or in time domain.

In an embodiment, the controller is further configured to remove common channel information between the prior CSI and the current CSI using the nulling matrix.

In an embodiment, the controller is further configured to preserve information of the wireless channel change in a nulling result and to condense the nulling result into the perturbation index value using a perturbation index formula.

In an embodiment, the controller is further configured to condense the nulling result into the perturbation index value using the perturbation index formula depending on a spatial domain configuration of the prior CSI and the current CSI.

In an embodiment, the controller is further configured to condense the nulling result into the perturbation index value using the perturbation index formula depending on whether the prior CSI and the current CSI are in frequency domain or in time domain.

In an embodiment, the perturbation index value is used for wireless sensing.

In an embodiment, the wireless transceiver is compatible with an Institute of Electrical and Electronics Engineers (IEEE) 802.11 protocol.

In an embodiment, the wireless device includes a wireless access point (AP) or a non-AP wireless station (STA) device.

In an embodiment, the wireless device is a component of a multi-link device (MLD).

In an embodiment, a wireless device includes a wireless transceiver compatible with an IEEE 802.11 protocol and configured to obtain prior channel state information (CSI) and current CSI and a controller configured to construct a nulling matrix using the prior CSI depending on a spatial domain configuration of the prior CSI and whether the prior CSI is in frequency domain or in time domain and to apply the nulling matrix to the current CSI to generate a perturbation index value that quantifies a wireless channel change using a perturbation index formula.

In an embodiment, the controller is further configured to remove common channel information between the prior CSI and the current CSI using the nulling matrix.

In an embodiment, the controller is further configured to preserve information of the wireless channel change in a nulling result and to condense the nulling result into the perturbation index value using the perturbation index formula.

In an embodiment, the perturbation index value is used for wireless sensing.

In an embodiment, the wireless device includes a wireless access point (AP) or a non-AP wireless station (STA) device.

In an embodiment, the wireless device is a component of a multi-link device (MLD).

In an embodiment, a method for wireless channel change detection includes at a wireless device, obtaining prior channel state information (CSI) and current CSI and at the wireless device, constructing a nulling matrix using the prior CSI and applying the nulling matrix to the current CSI to generate a perturbation index value that quantifies a wireless channel change.

In an embodiment, at the wireless device, constructing the nulling matrix using the prior CSI and applying the nulling matrix to the current CSI to generate the perturbation index value that quantifies the wireless channel change includes constructing the nulling matrix using the prior CSI depending on a spatial domain configuration of the prior CSI.

In an embodiment, at the wireless device, constructing the nulling matrix using the prior CSI and applying the nulling matrix to the current CSI to generate the perturbation index value that quantifies the wireless channel change includes constructing the nulling matrix using the prior CSI depending on whether the prior CSI is in frequency domain or in time domain.

Other aspects in accordance with the invention will become apparent from the following detailed description, taken in conjunction with the accompanying drawings, illustrated by way of example of the principles of the invention.

BRIEF DESCRIPTION OF THE DRAWINGS

Fig. 1 depicts a wireless communications system in accordance with an embodiment of the invention.

Fig. 2 depicts a multi-link communications system that is used for wireless communications in accordance with an embodiment of the invention.

Fig. 3 depicts a wireless device in accordance with an embodiment of the invention.

Fig. 4 is a process flow diagram of a method for wireless channel change detection that can be implemented by the wireless device depicted in Fig. 3.

Fig. 5 is a process flow diagram of a method for wireless channel change detection in accordance with an embodiment of the invention.

Throughout the description, similar reference numbers may be used to identify similar elements.

DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

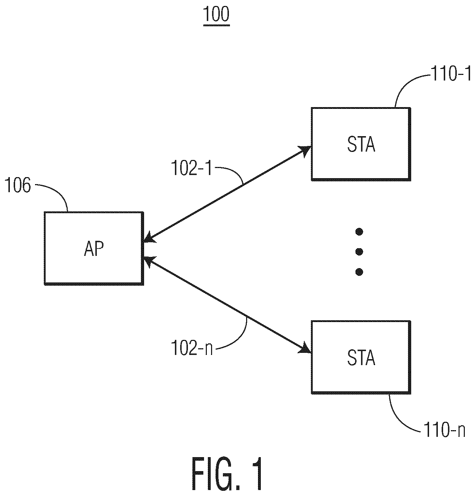

Fig. 1 depicts a wireless (e.g., WiFi) communications system 100 in accordance with an embodiment of the invention. In the embodiment depicted in Fig. 1, the wireless communications system 100 includes at least one AP 106 and at least one station (STA) 110-1, ..., 110-n, where n is a positive integer. The wireless communications system can be used in various applications, such as industrial applications, medical applications, computer applications, and/or consumer or enterprise applications. In some embodiments, the wireless communications system is compatible with an IEEE 802.11 protocol. Although the depicted wireless communications system 100 is shown in Fig. 1 with certain components and described with certain functionality herein, other embodiments of the wireless communications system may include fewer or more components to implement the same, less, or more functionality. For example, in some embodiments, the wireless communications system includes multiple APs with one STA, multiple APs with multiple STAs, one AP with one STA, or one AP with multiple STAs. In another example, although the wireless communications system is shown in Fig. 1 as being connected in a certain topology, the network topology of the wireless communications system is not limited to the topology shown in Fig. 1. In some embodiments, the wireless communications system 100 described with reference to Fig. 1 involves single-link communications and the AP and the STA communicate through single communications links. In some embodiments, the wireless communications system 100 described with reference to Fig. 1 involves multi-link communications and the AP and the STA communicate through multiple communications links. Furthermore, the techniques described herein may also be applicable to each link of a multi-link communications system.

In the embodiment depicted in Fig. 1, the AP 106 may be implemented in hardware (e.g., circuits), software, firmware, or a combination thereof. The AP 106 may be fully or partially implemented as an integrated circuit (IC) device. In some embodiments, the AP 106 is a wireless AP compatible with at least one WLAN communications protocol (e.g., at least one IEEE 802.11 protocol). In some embodiments, the AP is a wireless AP that connects to a local area network (LAN) and/or to a backbone network (e.g., the Internet) through a wired connection and that wirelessly connects to one or more wireless stations (STAs), for example, through one or more WLAN communications protocols, such as the IEEE 802.11 protocol. In some embodiments, the AP includes at least one antenna, at least one transceiver operably connected to the at least one antenna, and at least one controller operably connected to the corresponding transceiver. In some embodiments, the transceiver includes a physical layer (PHY) device. The controller may be configured to control the transceiver to process received packets through the antenna. In some embodiments, the controller is implemented within a processor, such as a microcontroller, a host processor, a host, a digital signal processor (DSP), or a central processing unit (CPU), which can be integrated in a corresponding transceiver. In some embodiments, the AP 106 (e.g., a controller or a transceiver of the AP) implements upper layer Media Access Control (MAC) functionalities (e.g., beacon acknowledgement establishment, reordering of frames, etc.) and/or lower layer MAC functionalities (e.g., backoff, frame transmission, frame reception, etc.). Although the wireless communications system 100 is shown in Fig. 1 as including one AP, other embodiments of the wireless communications system 100 may include multiple APs. In these embodiments, each of the APs of the wireless communications system 100 may operate in a different frequency band. For example, one AP may operate in a 2.4 gigahertz (GHz) frequency band and another AP may operate in a 5 GHz frequency band.

In the embodiment depicted in Fig. 1, each of the at least one STA 110-1, ..., 110-n may be implemented in hardware (e.g., circuits), software, firmware, or a combination thereof. The STA 110-1, ..., or 110-n may be fully or partially implemented as IC devices. In some embodiments, the STA 110-1, ..., or 110-n is a communications device compatible with at least one IEEE 802.11 protocol. In some embodiments, the STA 110-1, ..., or 110-n is implemented in a laptop, a desktop personal computer (PC), a mobile phone, or other communications device that supports at least one WLAN communications protocol. In some embodiments, the STA 110-1, ..., or 110-n implements a common MAC data service interface and a lower layer MAC data service interface. In some embodiments, the STA 110-1, ..., or 110-n includes at least one antenna, at least one transceiver operably connected to the at least one antenna, and at least one controller connected to the corresponding transceiver. In some embodiments, the transceiver includes a PHY device. The controller may be configured to control the transceiver to process received packets through the antenna. In some embodiments, the controller is implemented within a processor, such as a microcontroller, a host processor, a host, a DSP, or a CPU, which can be integrated in a corresponding transceiver.

In the embodiment depicted in Fig. 1, the AP 106 communicates with the at least one STA 110-1, ..., 110-n via a communication link 102-1, ..., 102-n, where n is a positive integer. In some embodiments, data communicated between the AP and the at least one STA 110-1, ..., 110-n includes MAC protocol data units (MPDUs). An MPDU may include a frame header, a frame body, and a trailer with the MPDU payload encapsulated in the frame body.

In some embodiments of a wireless communications system, a wireless device, e.g., an access point (AP) multi-link device (MLD) of a wireless local area network (WLAN) may transmit data to at least one associated station (STA) MLD (also referred to as a non-AP MLD). The AP MLD may be configured to operate with associated STA MLDs according to a communication protocol. For example, the communication protocol may be an Extremely High Throughput (EHT) communication protocol, or Institute of Electrical and Electronics Engineers (IEEE) 802.11be communication protocol. In some embodiments of the wireless communications system described herein, different associated STAs within range of an AP operating according to the EHT communication protocol are configured to operate according to at least one other communication protocol, which defines operation in a Basic Service Set (BSS) with the AP, but are generally affiliated with lower data throughput protocols. The lower data throughput communication protocols (e.g., High Efficiency (HE) communication protocol that is compatible with IEEE 802.11ax standards, Very High Throughput (VHT) communication protocol that is compatible with IEEE 802.11ac standards, etc.) may be collectively referred to herein as "legacy" communication protocols.

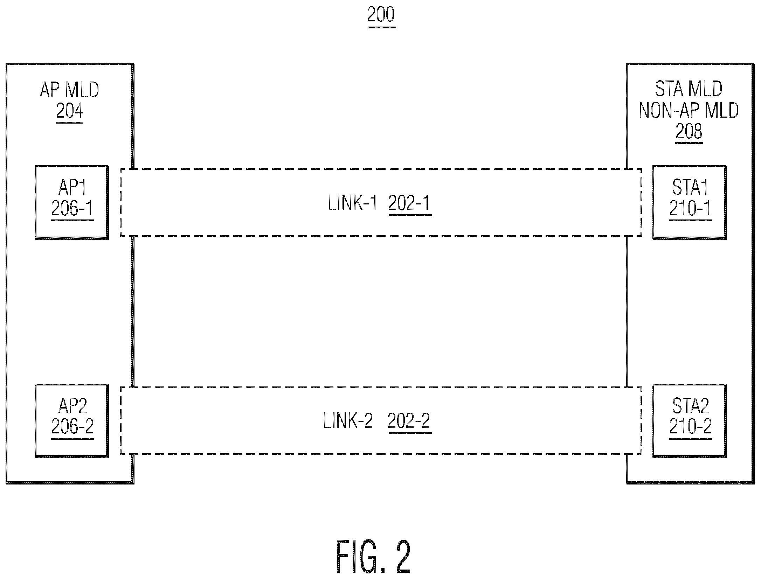

Fig. 2 depicts a multi-link communications system 200 that is used for wireless (e.g., WiFi) communications in accordance with an embodiment of the invention. In the embodiment depicted in Fig. 2, the multi-link communications system includes one AP multi-link device, which is implemented as AP MLD 204, and one non-AP STA multi-link device, which is implemented as STA MLD 208. The multi-link communications system can be used in various applications, such as industrial applications, medical applications, computer applications, and/or consumer or enterprise applications. In some embodiments, the multi-link communications system may be a wireless communications system, such as a wireless communications system compatible with an IEEE 802.11 protocol. For example, the multi-link communications system may be a wireless communications system compatible with an IEEE 802.11be protocol. Although the depicted multi-link communications system 200 is shown in Fig. 2 with certain components and described with certain functionality herein, other embodiments of the multi-link communications system may include fewer or more components to implement the same, less, or more functionality. For example, in some embodiments, the multi-link communications system includes a single AP MLD with multiple STA MLDs, or multiple AP MLDs with more than one STA MLD. In some embodiments, the legacy STAs (non-EHT STAs) may associate with one of the APs affiliated with the AP MLD. In another example, although the multi-link communications system is shown in Fig. 2 as being connected in a certain topology, the network topology of the multi-link communications system is not limited to the topology shown in Fig. 2.

In the embodiment depicted in Fig. 2, the AP MLD 204 includes two radios, implemented as APs 206-1 and 206-2. In such an embodiment, the APs may be AP1 206-1 and AP2 206-2. In some embodiments, a common part of the AP MLD 204 implements upper layer Media Access Control (MAC) functionalities (e.g., beaconing, association establishment, reordering of frames, etc.) and a link specific part of the AP MLD 204, i.e., the APs 206-1 and 206-2, implement lower layer MAC functionalities (e.g., backoff, frame transmission, frame reception, etc.). The APs 206-1 and 206-2 may be implemented in hardware (e.g., circuits), software, firmware, or a combination thereof. The APs 206-1 and 206-2 may be fully or partially implemented as an integrated circuit (IC) device. In some embodiments, the APs 206-1 and 206-2 may be wireless APs compatible with at least one WLAN communications protocol (e.g., at least one IEEE 802.11 protocol). For example, the APs 206-1 and 206-2 may be wireless APs compatible with an IEEE 802.11be protocol. In some embodiments, an AP MLD (e.g., AP MLD 204) connects to a local network (e.g., a LAN) and/or to a backbone network (e.g., the Internet) through a wired connection and wirelessly connects to wireless STAs, for example, through one or more WLAN communications protocols, such as an IEEE 802.11 protocol. In some embodiments, an AP (e.g., AP1 206-1 and/or AP2 106-2) includes at least one antenna, at least one transceiver operably connected to the at least one antenna, and at least one controller operably connected to the corresponding transceiver. In some embodiments, at least one transceiver includes a physical layer (PHY) device. The at least one controller may be configured to control the at least one transceiver to process received packets through the at least one antenna. In some embodiments, the at least one controller may be implemented within a processor, such as a microcontroller, a host processor, a host, a digital signal processor (DSP), or a central processing unit (CPU), which can be integrated in a corresponding transceiver. In some embodiments, each of the APs 206-1 or 206-2 of the AP MLD 204 may operate in a different BSS operating channel. For example, AP1 206-1 may operate in a 320 MHz (one million hertz) BSS operating channel at 6 Gigahertz (GHz) band and AP2 206-2 may operate in a 160 MHz BSS operating channel at 5 GHz band. Although the AP MLD 204 is shown in Fig. 2 as including two APs, other embodiments of the AP MLD 204 may include more than two APs.

In the embodiment depicted in Fig. 2, the non-AP STA multi-link device, implemented as STA MLD 208, includes two radios which are implemented as non-AP STAs 210-1 and 210-2. In such an embodiment, the non-AP STAs may be STA1 210-1 and STA2 210-2. The STAs 210-1 and 210-2 may be implemented in hardware (e.g., circuits), software, firmware, or a combination thereof. The STAs 210-1 and 210-2 may be fully or partially implemented as an IC device. In some embodiments, the non-AP STAs 210-1 and 210-2 are part of the STA MLD 208, such that the STA MLD may be a communications device that wirelessly connects to a wireless AP MLD. For example, the STA MLD 208 may be implemented in a laptop, a desktop personal computer (PC), a mobile phone, or other communications device that supports at least one WLAN communications protocol. In some embodiments, the non-AP STA MLD 208 is a communications device compatible with at least one IEEE 802.11 protocol (e.g., an IEEE 802.11be protocol, an IEEE 802.11ax protocol, or an IEEE 802.11ac protocol). In some embodiments, the STA MLD 208 implements a common MAC data service interface and the non-AP STAs 210-1 and 210-2 implement a lower layer MAC data service interface.

In some embodiments, the AP MLD 204 and/or the STA MLD 208 may identify which communication links support multi-link operation during a multi-link operation setup phase and/or exchanges information regarding multi-link capabilities during the multi-link operation setup phase. In some embodiments, each of the non-AP STAs 210-1 and 210-2 of the STA MLD 208 may operate in a different frequency band. For example, the non-AP STA 210-1 may operate in the 2.4 GHz frequency band and the non-AP STA 210-2 may operate in the 5 GHz frequency band. In some embodiments, each STA includes at least one antenna, at least one transceiver operably connected to the at least one antenna, and at least one controller connected to the corresponding transceiver. In some embodiments, at least one transceiver includes a PHY device. The at least one controller may be configured to control the at least one transceiver to process received packets through the at least one antenna. In some embodiments, the at least one controller may be implemented within a processor, such as a microcontroller, a host processor, a host, a DSP, or a CPU, which can be integrated in a corresponding transceiver.

In the embodiment depicted in Fig. 2, the STA MLD 208 communicates with the AP MLD 204 via two communication links, e.g., link 1 202-1 and link 2 202-2. For example, each of the non-AP STAs 210-1 or 210-2 communicates with an AP 206-1 or 206-2 via corresponding communication links 202-1 or 202-2. In an embodiment, a communication link (e.g., link 1 202-1 or link 2 202-2) may include a BSS operating channel established by an AP (e.g., AP1 206-1 or AP2 206-2) that features multiple 20 MHz channels used to transmit frames (e.g., Physical Layer Protocol Data Units (PPDUs), Beacon frames, management frames, etc.) between a first wireless device (e.g., an AP, an AP MLD, an STA, or an STA MLD) and a second wireless device (e.g., an AP, an AP MLD, an STA, or an STA MLD). In some embodiments, a 20 MHz channel may be a punctured 20 MHz channel or an unpunctured 20 MHz channel. Although the STA MLD 208 is shown in Fig. 2 as including two non-AP STAs, other embodiments of the STA MLD 208 may include one non-AP STA or more than two non-AP STAs. In addition, although the AP MLD 204 communicates (e.g., wirelessly communicates) with the STA MLD 208 via the communications links 202-1 and 202-2, in other embodiments, the AP MLD 204 may communicate (e.g., wirelessly communicate) with the STA MLD 208 via more than two communication links or less than two communication links.

In some embodiments, a first MLD, e.g., an AP MLD or non-AP MLD (STA MLD), may transmit management frames in a multi-link operation with a second MLD, e.g., STA MLD or AP MLD, to coordinate the multi-link operation between the first MLD and the second MLD. As an example, a management frame may be a channel switch announcement frame, a (Re)Association Request frame, a (Re)Association Response frame, a Beacon frame, a Disassociation frame, an Authentication frame, and/or a Block Acknowledgement (Ack) (BA) Action frame, etc. In some embodiments, one or more management frames may be transmitted via a cross-link transmission (e.g., according to an IEEE 802.11be communication protocol). As an example, a cross-link management frame transmission may involve a management frame being transmitted and/or received on one link (e.g., link 1 202-1) while carrying information of another link (e.g., link 2 202-2). In some embodiments, a management frame is transmitted on any link (e.g., at least one of two links or at least one of multiple links) between a first MLD (e.g., AP MLD 204) and a second MLD (e.g., STA MLD 208). As an example, a management frame may be transmitted between a first MLD and a second MLD on any link (e.g., at least one of two links or at least one of multiple links) associated with the first MLD and the second MLD.

Wireless channel state information (CSI) of a wireless system (e.g., a multi-antennas Multiple input multiple output-Orthogonal frequency division multiplexing (MIMO-OFDM) system) may be naturally high-dimensional. A wireless channel change, which may be caused by a motion change or an environmental change, can trigger changes in wireless channel state information. Because wireless channel state information may be high-dimensional, quantifying the channel change between prior and current channel state information can be challenging. In some embodiments, wireless communication devices, such as, WiFi APs/STAs, are capable of generating channel state information (CSI) from hardware (HW) channel estimation. By comparing the CSI of current packet transmission with that of prior packet transmission using a perturbation index algorithm, the channel change can be quantified using a single value, which can be used for various applications (e.g., wireless sensing purpose, e.g., for presence/intrusion detection, breathing detection). Depending on the spatial domain configurations and CSI in frequency domain or time domain, different perturbation index algorithms can be implemented.

In some embodiments, a perturbation index algorithm mainly consists of two steps. For example, in a first step, a nulling matrix is constructed using the prior channel state information. In a second step, the nulling matrix is applied to the current channel state information. In an example, prior channel state information is channel state information that has been obtained/generated/learned/received at some point earlier in time relative to when current channel state information has been obtained/generate/learned/received. The common channel information between the prior channel state information and the current channel state information is eliminated by the nulling matrix. After nulling, the information of channel change is preserved in the nulling result. The nulling result can be further condensed into a single value through a perturbation index formula. Depending on the CSI spatial domain configurations and channel information in frequency domain or time domain, different ways of constructing the nulling matrix and the perturbation index formula can be implemented.

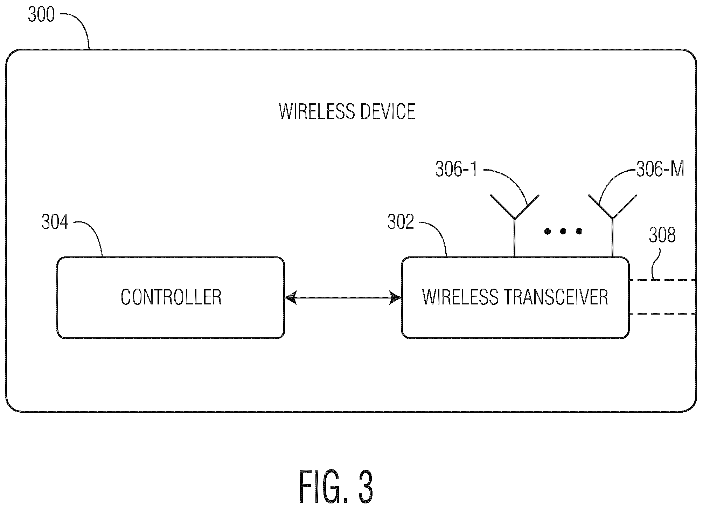

Fig. 3 depicts a wireless device 300 in accordance with an embodiment of the invention. The wireless device 300 can be used in the wireless communications system 100 depicted in Fig. 1 and/or the multi-link communications system 200 depicted in Fig. 2. For example, the wireless device 300 may be an embodiment of the AP 106 depicted in Fig. 1, the STA 110-1, ..., 110-n depicted in Fig. 1, the APs 206-1, 206-2 depicted in Fig. 2, and/or the STAs 210-1, 210-2 depicted in Fig. 2. In the embodiment depicted in Fig. 3, the wireless device 300 includes a wireless transceiver 302, a controller 304 operably connected to the wireless transceiver, and one or more antennas 306-1, ..., 306-M (M is a positive integer) operably connected to the wireless transceiver. In some embodiments, the wireless device 300 may include at least one optional network port 308 operably connected to the wireless transceiver. In some embodiments, the wireless transceiver includes a physical layer (PHY) device. The wireless transceiver may be any suitable type of wireless transceiver. For example, the wireless transceiver may be a LAN transceiver (e.g., a transceiver compatible with an IEEE 802.11 protocol). In some embodiments, the wireless device 300 includes multiple transceivers. The controller may be configured to control the wireless transceiver (e.g., by generating a control signal) to process packets received through the antenna and/or the network port and/or to generate outgoing packets to be transmitted through the antenna and/or the network port. In some embodiments, the wireless transceiver transmits one or more feedback signals to the controller. In some embodiments, the controller is implemented within a processor, such as a microcontroller, a host processor, a host, a DSP, or a CPU. In some embodiments, the wireless transceiver 302 is implemented in hardware (e.g., circuits), software, firmware, or a combination thereof. Each antenna 306-1, ..., or 306-M may be any suitable type of antenna. For example, each antenna 306-1, ..., or 306-M antenna may be an induction type antenna such as a loop antenna or any other suitable type of induction type antenna. However, the antenna is not limited to an induction type antenna. In some embodiments, the wireless device 300 includes multiple antennas 306-1, ..., 306-M. For example, the wireless device 300 may be a multi-antennas MIMO device, such as a multi-antennas Multiple input multiple output-Orthogonal frequency division multiplexing (MIMO-OFDM). The network port may be any suitable type of port.

In accordance with an embodiment of the invention, the wireless transceiver 302 is configured to obtain prior channel state information (CSI) and current CSI and the controller 304 is configured to construct a nulling matrix using the prior CSI and to apply the nulling matrix to the current CSI to generate a perturbation index value that quantifies a wireless channel change. By constructing the nulling matrix using the prior CSI and applying the nulling matrix to the current CSI, changes in high-dimensional wireless CSI caused by the wireless channel change can be quantified using the perturbation index value, instead of in the form of high-dimensional parameters. The perturbation index value is robust with regard to independent CSI phase noise and Automatic Gain Control (AGC) gain from hardware and can be used to easily detect a wireless channel change. For example, if the perturbation index value is greater than a threshold value, a wireless channel change is detected. The perturbation index value can be used for various wireless channel change detection applications, for example, for wireless sensing purpose (e.g., for presence/intrusion detection and/or breathing detection in which wireless channel changes are caused by motion changes or environmental changes). In an example, prior channel state information is channel state information that has been obtained/generated/learned/received at some point earlier in time relative to when current channel state information has been obtained/generate/learned/received. In some embodiments, the controller 304 is further configured to construct the nulling matrix using the prior CSI depending on a spatial domain configuration of the prior CSI. In some embodiments, the controller 304 is further configured to construct the nulling matrix using the prior CSI depending on whether the prior CSI is in frequency domain or in time domain. In some embodiments, the controller 304 is further configured to remove common channel information between the prior CSI and the current CSI using the nulling matrix. In some embodiments, the controller 304 is further configured to preserve information of the wireless channel change in a nulling result and to condense the nulling result into the perturbation index value using a perturbation index formula. In some embodiments, the controller 304 is further configured to condense the nulling result into the perturbation index value using the perturbation index formula depending on a spatial domain configuration of the prior CSI and the current CSI. In some embodiments, the controller 304 is further configured to condense the nulling result into the perturbation index value using the perturbation index formula depending on whether the prior CSI and the current CSI are in frequency domain or in time domain. The perturbation index value can be used for various applications. In some embodiments, the perturbation index value is used for wireless sensing, for example, for presence/intrusion detection, breathing detection, etc. (e.g., using the controller 304 or a dedicated wireless sensing module of the wireless device 300 depicted in Fig. 3). In some embodiments, the wireless transceiver 302 is compatible with an Institute of Electrical and Electronics Engineers (IEEE) 802.11 protocol. In some embodiments, the wireless device 300 includes a wireless access point (AP) or a non-AP wireless station (STA) device. In some embodiments, the wireless device 300 is a component of a multi-link device (MLD).

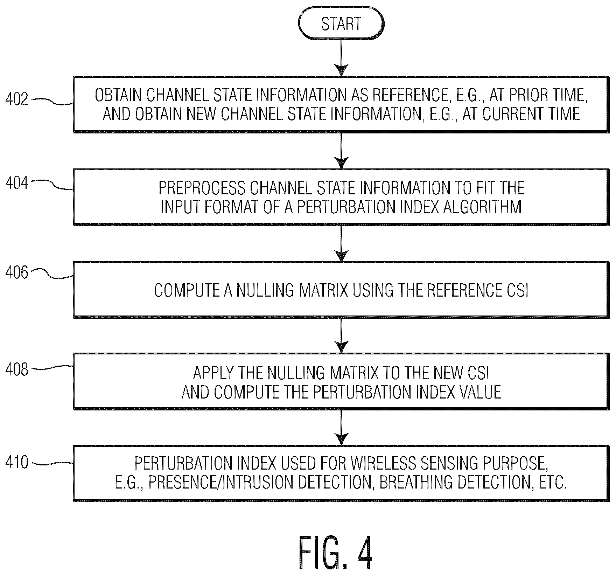

Fig. 4 is a process flow diagram of a method for wireless channel change (e.g., caused by a motion change or an environmental change) detection that can be implemented by the wireless device 300 depicted in Fig. 3. At block 402, a channel state information, e.g., at prior time, is obtained as reference, and a new channel state information, e.g., at current time, is obtained, for example, using the wireless transceiver 302 of the wireless device 300 depicted in Fig. 3. At block 404, channel state information is preprocessed to fit the input format of a perturbation index algorithm, for example, using the controller 304 of the wireless device 300 depicted in Fig. 3. At block 406, a nulling matrix is computed using the reference channel state information, for example, using the controller 304 of the wireless device 300 depicted in Fig. 3. At block 408, the nulling matrix is applied to the new channel state information and the perturbation index value is computed, for example, using the controller 304 of the wireless device 300 depicted in Fig. 3. At block 410, the perturbation index value is used for wireless sensing purpose, for example, for presence/intrusion detection, breathing detection, etc. (e.g., using the controller 304 or a dedicated wireless sensing module of the wireless device 300 depicted in Fig. 3).

Wireless channel state information (CSI), which may be collected or obtained by a hardware (HW) channel estimation module (e.g., the wireless transceiver 302 of the wireless device 300 depicted in Fig. 3), may be in frequency domain or in time domain. In some embodiments, the wireless CSI in frequency domain comes directly from a channel estimation module in an OFDM system (e.g., the wireless transceiver 302 of the wireless device 300 depicted in Fig. 3). In some embodiments, the wireless CSI in time domain is channel impulse response (CIR) or a segment of a time-domain received signal waveform. The wireless CSI may be high-dimensional. For example, the wireless CSI has the dimensional of $K \times Nr \times Nss$, K is the number of subcarriers if the wireless CSI is in frequency domain, or K is the number of time slots if the wireless CSI is in time domain, Nr is the number of receiving antennas, and Nss is the total number of spatial data streams. Depending on CSI configurations, different approaches of constructing nulling matrix and computing perturbation index are implemented, for example, in an AP or a non-AP STA (e.g., the wireless device 300 depicted in Fig. 3).

In a first case, CSI nulling is performed or implemented based on spatial-domain information, for example, in an AP or a non-AP STA (e.g., the wireless device 300 depicted in Fig. 3). For example, in an AP or a non-AP STA (e.g., the wireless device 300 depicted in Fig. 3), a transmitter (TX) (e.g., the wireless transceiver 302 of the wireless device 300 depicted in Fig. 3) sends multiple data stream and/or a receiver (RX) (e.g., the wireless transceiver 302 of the wireless device 300 depicted in Fig. 3) has or utilizes multiple receiving antennas (e.g., the antennas 306-1, ..., 306-M of the wireless device 300 depicted in Fig. 3). In some embodiments, if/when the wireless CSI is in frequency domain, a nulling matrix is constructed at each tone utilizing the spatial-domain information (e.g., by the controller 304 of the wireless device 300 depicted in Fig. 3). In some embodiments, if/when the wireless CSI is in time domain, a nulling matrix is constructed at each time slot utilizing the spatial-domain information (e.g., by the controller 304 of the wireless device 300 depicted in Fig. 3). For example, it is assumed that a reference CSI at index $k$, $k \in \Psi$ is $h_k$ with dimension $N_r \times N_{ss}$, and Nss > 1 or Nr > 1, $\Psi = \{0, 1, ..., K - 1\}$ is the set of available indices, $k$ represents an index number (e.g., k is tone index if CSI in frequency domain while k is time slot index if CSI in time domain), $h_k$ represents the reference CSI at index $k$, Nr is the number of receiving antennas, and Nss is the total number of spatial data streams. New CSI is $\overline{h}_k = h_k + \Delta h_k$ at index k, where $\overline{h}_k$ represents the new CSI, while $\Delta h_k$ is the channel change, which needs to be detected. In CSI preprocessing, if $N_{ss} > N_r$, $h_k$ and $\overline{h}_k$ are reshaped to $N_{ss} \times N_r$ using matrix transposing. A perturbation index algorithm that can be implemented, for example, by the controller 304 of the wireless device 300 depicted in Fig. 3, is described as follows.

Step 1: at each index k, a null matrix is computed using equation (1):

$$G_k = I - h_k \left( h_k^H h_k \right)^{-1} h_k^H, \tag{1}$$

where $I$ represents an identity matrix (e.g., a diagonal matrix with all its diagonal elements being equal to 1 and every other element being equal to 0), k represents an index number (e.g., k is tone index if CSI in frequency domain while k is time slot index if CSI in time domain), $G_k$ represents the null matrix at index $k$, $h_k$ represents the reference CSI at index $k$, and $h_k^H$ represents the conjugate transpose of the matrix $h_k$ (there are also other ways of constructing the nulling matrix $G_k$ as long as $Gh_k = 0$);

Step 2: at each index k, the null matrix $G_k$ is applied toward the new CSI $\overline{h}_k$ to extract the information of channel change:

$$y_k = G_k \overline{h}_k = G_k(h_k + \Delta h_k) = G_k \Delta h_k, \tag{2}$$

where k represents an index number (e.g., k is tone index if CSI in frequency domain while k is time slot index if CSI in time domain), $y_k$ represents the information of channel change at index $k$, $G_k$ represents the null matrix at index $k$, $h_k$ represents the reference CSI at index $k$, $\overline{h}_k$ represents the new CSI at index $k$, and $\Delta h_k$ is the channel change at index $k$;

Step 3: the perturbation index value (dB), which consists of a nulling amount and a correlation amount, can be expressed as:

$$PI = Null + Corr = 10 \log_{10} \left| \sum_{k,k+1 \in \Psi} \mathrm{Tr}(y_k^H y_{k+1}) \right| - 10 \log_{10} \sum_{k \in \Psi} \left\| \overline{h}_k \right\|^2, \tag{3}$$

where $PI$ represents the perturbation index value, $Tr$ represents trace operation, where $Null$ represents the Nulling amount, $Corr$ represents the correlation amount, $k$ represents an index number (e.g., k is tone index if CSI in frequency domain while k is time slot index if CSI in time domain), $y_k$ represents the information of channel change at index $k$, $\overline{h}_k$ represents the new CSI at index $k$, $y_k^H$ represents the conjugate transpose of the matrix $y_k$, and $\Psi = \{0, 1, ..., K - 1\}$ is the set of available indices. The Nulling amount can be expressed as:

$$Null = 10 \log_{10} \sum_{k \in \Psi} \left\| y_k \right\|^2 - 10 \log_{10} \sum_{k \in \Psi} \left\| \overline{h}_k \right\|^2, \tag{4}$$

where $Null$ represents the Nulling amount, $k$ represents an index number (e.g., k is tone index if CSI in frequency domain while k is time slot index if CSI in time domain), $y_k$ represents the information of channel change at index $k$, $\overline{h}_k$ represents the new CSI at index $k$, and $\Psi = \{0, 1, ..., K - 1\}$ is the set of available indices. The correlation amount can be expressed as:

$$Corr = 10 \log_{10} \left| \sum_{k,k+1 \in \Psi} \mathrm{Tr}(y_k^H y_{k+1}) \right| - 10 \log_{10} \sum_{k \in \Psi} \left\| y_k \right\|^2 \quad, \tag{5}$$

where *Corr* represents the correlation amount, *Tr* represents trace operation, *k* represents an index number (e.g., k is tone index if CSI in frequency domain while k is time slot index if CSI in time domain), $y_k$ represents the information of channel change at index *k*, $y_k^H$ represents the conjugate transpose of the matrix $y_k$, and $\Psi = \{0,1,...,K-1\}$ is the set of available indices.

In a second case, the wireless CSI is in frequency domain with no spatial-domain information, and CSI nulling is performed or implemented based on frequency-domain information, for example, in an AP or a non-AP STA (e.g., the wireless device 300 depicted in Fig. 3). In this case, due to the lack of the spatial-domain information, a nulling matrix is constructed cross all tones (e.g., by the controller 304 of the wireless device 300 depicted in Fig. 3). Because each CSI may have its own random linear phase across all tones, only CSI amplitude information is used to overcome the phase randomness issue. For example, it is assumed that a reference CSI at tone k is $h_k$ with dimension 1 x 1 (e.g., Nss = 1 and Nr = 1). $k \in \Psi$ is the tone index and the set of available tones is $\Psi = \{0,1,...,K-1\}$. New CSI is $\overline{h}_k = h_k + \Delta h_k$ at tone k where $\Delta h_k$ is the channel change, which needs to be detected. CSI preprocessing constructs a reference vector $Y = [|h_0| \, |h_1| \, ... \, |h_{-1}|]^T$ and a new CSI vector $\overline{Y} = [|\overline{h}_0| \, |\overline{\lambda}_1| \, ... \, |\overline{\lambda}_{K-1}|]^T$ (Each CSI has independent phase roll and only amplitude information is used for the calculation). A perturbation index algorithm that can be implemented, for example, by the controller 304 of the wireless device 300 depicted in Fig. 3, is described as follows.

Step 1: a null matrix is computed using equation (6):

$$G = I - YY^H / \|Y\|^2, \tag{6}$$

where *I* represents an identity matrix (e.g., a diagonal matrix with all its diagonal elements being equal to 1 and every other element being equal to 0), *G* represents the null matrix, *Y* represents a reference vector, and $Y^H$ represents the conjugate transpose of the matrix *Y* (there are also other ways of constructing nulling matrix *G* as long as $GY = 0$);
Step 2: the null matrix G is applied toward a new CSI vector $\overline{Y}$ to extract the information of channel change:

$$\Delta Y = G\overline{Y}, \tag{7}$$

where G represents the null matrix, $\overline{Y}$ represents the new CSI vector, and $\Delta Y$ represents the information of channel change;
Step 3: The perturbation index value (dB), which consists of nulling amount and correlation amount, can be expressed as:

$$PI = Null + Corr = 10 \log_{10} \left| \Delta Y(0:K-2)^H \Delta Y(1:K-1) \right| - 10 \log_{10} \left\| \overline{Y} \right\|^2 \quad, \tag{8}$$

where *PI* represents the perturbation index value, *Null* represents the Nulling amount, *Corr* represents the correlation amount, *k* represents an index number, $\Delta Y$ represents the information of channel change, $\overline{Y}$ represents the new CSI vector, and $\Delta Y(0:K-2)^H$ represents the conjugate transpose of the matrix $\Delta Y(0:K-2)$. The Nulling amount can be expressed as:

$$Null = 10 \log_{10} \left\| \Delta Y \right\|^2 - 10 \log_{10} \left\| \overline{Y} \right\|^2 \quad, \tag{9}$$

where *Null* represents the Nulling amount, $\Delta Y$ represents the information of channel change, and $\overline{Y}$ represents the new CSI vector. The correlation amount can be expressed as:

$$Corr = 10 \log_{10} \left| \Delta Y(0:K-2)^H \Delta Y(1:K-1) \right| - 10 \log_{10} \left\| \Delta Y \right\|^2 \quad, \tag{10}$$

where *Corr* represents the correlation amount, *k* represents an index number, $\Delta Y$ represents the information of channel change, and $\Delta Y(0:K-2)^H$ represents the conjugate transpose of the matrix $\Delta Y(0:K-2)$.

In a third case, the wireless CSI is in time domain with no spatial-domain information, and CSI nulling is performed or implemented based on time-domain information, for example, in an AP or a non-AP STA (e.g., the wireless device 300 depicted in Fig. 3). In this case, due to the lack of the spatial-domain information, nulling matrix is constructed cross all time slots (e.g., by the controller 304 of the wireless device 300 depicted in Fig. 3). Because each CSI may have its own random time offset, CSI pre-alignment methods are presented. For example, it is assumed that a reference CSI at time slot k is $h_k$ with dimension 1 x 1 (e.g., Nss = 1 and Nr = 1), $k \in \Psi$ is the time slot and $\Psi$ is the set of available time slots. The new CSI is $\overline{h}_k$ at time slot k. CSI preprocessing is needed, namely CSI alignment, due to the random time offset: a reference vector $Y = [h_0 \; h_1 \dots h_{K-1}]^T$ and a new CSI vector $\overline{Y} = [\overline{h}_0 \; h_1 \dots \lambda_{K-1}]^T$ are constructed, where $h_k$ represents the reference CSI at time slot k and $\overline{h}_k$ represents the new CSI at time slot k. Because each CSI may have different random time shift, the two CIRs need to be time-aligned before computing the perturbation index. Two example methods can be used to align CSI. In a CSI-peak-based method that can be implemented by the controller 304 of the wireless device 300 depicted in Fig. 3,

$$p = \arg\max_{k\in\Psi} |\overline{h}_k| - \arg\max_{k\in\Psi} |h_k| , \qquad (11)$$

where $p$ represents the random time shift difference between two CSIs, arg max or argmax represents the arguments of the maxima, $k$ represents time slot number, $h_k$ represents the reference CSI at time slot k, and $\overline{h}_k$ represents the new CSI at time slot k. In a CSI-correlation-based method that can be implemented by the controller 304 of the wireless device 300 depicted in Fig. 3, the peak time slot difference is found as:

$$p = \arg\max_{k\in\Psi} \left| \sum_{t=0}^{K-1} \overline{h}_t h^*_{(t-k+K)\%K} \right| , \qquad (12)$$

where $p$ represents the peak time slot difference, arg max or argmax represents the arguments of the maxima, $k$ represents time slot number, $h_k$ represents the reference CSI at time slot k, and $\overline{h}_k$ represents the new CSI at time slot k. The peak time slot difference can be efficiently solved using the formula (13)

$$p = \arg\max | IFFT(FFT(\overline{Y})FFT(Y)^*) | , \qquad (13)$$

where $p$ represents the peak time slot difference, arg max or argmax represents the arguments of the maxima, FFT represents Fast Fourier Transform function, IFFT represents Inverse Fast Fourier Transform function, $Y$ represents the reference CSI vector, and $\overline{Y}$ represents the new CSI vector. The new CSI vector is realigned as:

$$\overline{Y} = [\overline{h}_p \; \overline{h}_{p+1} \dots \overline{h}_{(p+K-1)\%K}]^T , \qquad (14)$$

where $\overline{Y}$ represents the new CSI vector, $\overline{h}_k$ represents the new CSI at time slot k, and % is the modulo operator. The perturbation index algorithm that can be implemented, for example, by the controller 304 of the wireless device 300 depicted in Fig. 3, is the same as the perturbation index algorithm in the second case:

Step 1: a null matrix is computed using equation (15):

$$G = I - YY^H / \|Y\|^2 , \qquad (15)$$

where $I$ represents an identity matrix (e.g., a diagonal matrix with all its diagonal elements being equal to 1 and every other element being equal to 0), $G$ represents the null matrix, $Y$ represents a reference vector, and $Y^H$ represents the conjugate transpose of the matrix $Y$ (there are also other ways of constructing nulling matrix $G$ as long as $GY = 0$); Step 2: the null matrix $G$ is applied toward a new CSI vector $\overline{Y}$ to extract the information of channel change:

$$\Delta Y = G\overline{Y} , \qquad (16)$$

where G represents the null matrix, $\overline{Y}$ represents the new CSI vector, and $\Delta Y$ represents the information of channel change;

Step 3: The perturbation index value (dB), which consists of nulling amount and correlation amount, can be expressed as:

$$PI = Null + Corr = 10\log_{10}\left|\Delta Y(0:K-2)^H \Delta Y(1:K-1)\right| - 10\log_{10}\left\|\overline{Y}\right\|^2, \quad (17)$$

where *PI* represents the perturbation index value, *Null* represents the Nulling amount, *Corr* represents the correlation amount, *k* represents an index number, *ΔY* represents the information of channel change, $\overline{Y}$ represents the new CSI vector, and *ΔY(0: K - 2)$^H$* represents the conjugate transpose of the matrix *ΔY(0: K - 2)*. The Nulling amount can be expressed as:

$$Null = 10\log_{10}\left\|\Delta Y\right\|^2 - 10\log_{10}\left\|\overline{Y}\right\|^2, \quad (18)$$

where *Null* represents the Nulling amount, *ΔY* represents the information of channel change, and $\overline{Y}$ represents the new CSI vector. The correlation amount can be expressed as:

$$Corr = 10\log_{10}\left|\Delta Y(0:K-2)^H \Delta Y(1:K-1)\right| - 10\log_{10}\left\|\Delta Y\right\|^2, \quad (19)$$

where *Corr* represents the correlation amount, *k* represents an index number, *ΔY* represents the information of channel change, and *ΔY(0: K - 2)$^H$* represents the conjugate transpose of the matrix *ΔY(0: K - 2)*.

In some embodiments, the perturbation index algorithm with CSI nulling based on spatial-domain information in the first case is generally applied for any channel state information reshaped with dimensions K x M x N (assume $K \geq M \geq N \geq 1$ without loss of generality, where K represents an index number, M and N are positive integers), where $M \times N > 1$. For example, assuming original CSI dimension is L x 1, e.g., no spatial information, where L = K x M x N, the original CSI can be reshaped with dimensions K x M x N such as every M x N tones are grouped and the perturbation index algorithm in the first case can be applied.

In some embodiments, the perturbation index algorithm with CSI nulling based on time/frequency-domain information in the second case and the third case can be generalized for any channel state information reshaped with dimension K x M x N (assume $K \geq M \geq N \geq 1$ without loss of generality, where K represents an index number, M and N are positive integers) where $M \times N > 1$. For example, the perturbation index value can be computed on each single spatial stream (total spatial stream number is $M \times N$), and then be averaged to obtain the final perturbation index value.

The perturbation index method using CSI nulling to detect a wireless channel change is robust towards the independent CSI phase noise and Automatic Gain Control (AGC) gain from hardware rather than a wireless environmental channel change. Assume the reference CSI is $h_k^{ref} = a_1 h_k e^{\theta_1 j}$, where $\theta_1$ represents the random phase noise, $a_1$ represents the AGC gain coming from hardware, and $h_k$ represents the reference CSI at index k. The new CSI containing CSI change is $\overline{h}_k = a_2(h_k + \Delta h_k)e^{\theta_2 j}$, where $\theta_2$ represents the random phase noise, $a_2$ represents the AGC gain coming from hardware, and $\overline{h}_k$ represents the new CSI at index *k*. In different CSI dump, $(\theta_1, a_1)$ can be different from $(\theta_2, a_2)$. If $h_k^{ref}$ is simply subtracted from $\overline{h}_k$, i.e., $\overline{h}_k - h_k^{ref} = a_2(h_k + \Delta h_k)e^{\theta_2 j} - a_1 h_k e^{\theta_1 j}$, the CSI difference obtained by subtraction can be affected by the AGC gain and the random phase noise and therefore inaccurate. Even if there is no channel change, namely $\Delta h_k = 0$, the CSI difference $\overline{h}_k - h_k^{ref}$ can still be non-zero. The perturbation index method is insensitive to the phase noise $\theta$ and the AGC gain *a* because the phase noise $\theta$ and the AGC gain *a* are intrinsically canceled in the perturbation index formula. For example, in the first case, the nulling matrix is $G_k = I - h^{ref}_k (h_k^{refH} h^{ref}_k)^{-1} h_k^{refH}$ ($h_k$ representing the reference CSI at index *k*), which naturally cancels $(\theta_1, a_1)$ in $h_k^{ref}$. The perturbation index value can be expressed as:

$$PI = Null + Corr = 10 \log_{10} \left| \sum_{k,k+1 \in \Psi} \mathrm{Tr}(y_k^H y_{k+1}) \right| - 10 \log_{10} \sum_{k \in \Psi} \left\| \overline{h}_k \right\|^2 , \qquad (20)$$

where $PI$ represents the perturbation index value, $Tr$ represents trace operation, where $Null$ represents the Nulling amount, $Corr$ represents the correlation amount, $k$ represents an index number, $y_k$ represents the information of channel change at index $k$, $\overline{h}_k$ represents the new CSI at index $k$, $y_k^H$ represents the conjugate transpose of the matrix $y_k$, and $\Psi = \{0, 1, ..., K - 1\}$ is the set of available indices. The perturbation index value can naturally cancel $(\theta_2, a_2)$ in $\overline{h}_k$. Consequently, the CSI change measured by the perturbation index method is not affected by the random phase noise and the AGC gain from hardware.

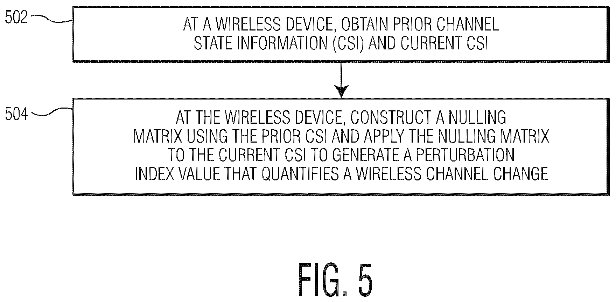

Fig. 5 is a process flow diagram of a method for wireless channel change detection in accordance with an embodiment of the invention. At block 502, at a wireless device, prior channel state information (CSI) and current CSI are obtained. At block 504, at the wireless device, a nulling matrix is constructed using the prior CSI and the nulling matrix is applied to the current CSI to generate a perturbation index value that quantifies a wireless channel change. In some embodiments, the nulling matrix is constructed using the prior CSI depending on a spatial domain configuration of the prior CSI. In an example, prior channel state information is channel state information that has been obtained/generated/learned/received at some point earlier in time relative to when current channel state information has been obtained/generate/learned/received. In some embodiments, the nulling matrix is constructed using the prior CSI depending on whether the prior CSI is in frequency domain or in time domain. In some embodiments, common channel information between the prior CSI and the current CSI is removed using the nulling matrix. In some embodiments, information of the wireless channel change is preserved in a nulling result and the nulling result is condensed into the perturbation index value using a perturbation index formula. In some embodiments, the nulling result is condensed into the perturbation index value using the perturbation index formula depending on a spatial domain configuration of the prior CSI and the current CSI. In some embodiments, the nulling result is condensed into the perturbation index value using the perturbation index formula depending on whether the prior CSI and the current CSI are in frequency domain or in time domain. In some embodiments, the perturbation index value is used for wireless sensing. In some embodiments, the wireless device is compatible with an Institute of Electrical and Electronics Engineers (IEEE) 802.11 protocol. In some embodiments, the wireless device includes a wireless access point (AP) or a non-AP wireless station (STA) device. In some embodiments, the wireless device is a component of a multi-link device (MLD). The wireless device may be the same as or similar to an embodiment of the AP 106 depicted in Fig. 1, the STA 110-1, ..., 110-n depicted in Fig. 1, the APs 206-1, 206-2 depicted in Fig. 2, the STAs 210-1, 210-2 depicted in Fig. 2, and/or the wireless device 300 depicted in Fig. 3.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

**Claims**

1.  A wireless device comprising:

    a wireless transceiver configured to obtain prior channel state information, CSI, and current CSI; and

a controller configured to construct a nulling matrix using the prior CSI and to apply the nulling matrix to the current CSI to generate a perturbation index value that quantifies a wireless channel change.

2. The wireless device of claim 1, wherein the controller is further configured to construct the nulling matrix using the prior CSI depending on a spatial domain configuration of the prior CSI.

3. The wireless device of claim 2, wherein the controller is further configured to construct the nulling matrix using the prior CSI depending on whether the prior CSI is in frequency domain or in time domain.

4. The wireless device of any preceding claim, wherein the controller is further configured to remove common channel information between the prior CSI and the current CSI using the nulling matrix.

5. The wireless device of claim 4, wherein the controller is further configured to preserve information of the wireless channel change in a nulling result and to condense the nulling result into the perturbation index value using a perturbation index formula.

6. The wireless device of claim 5, wherein the controller is further configured to condense the nulling result into the perturbation index value using the perturbation index formula depending on a spatial domain configuration of the prior CSI and the current CSI.

7. The wireless device of claim 6, wherein the controller is further configured to condense the nulling result into the perturbation index value using the perturbation index formula depending on whether the prior CSI and the current CSI are in frequency domain or in time domain.

8. The wireless device of any preceding claim, wherein the perturbation index value is used for wireless sensing.

9. The wireless device of any preceding claim, wherein the wireless transceiver is compatible with an Institute of Electrical and Electronics Engineers, IEEE, 802.11 protocol.

10. The wireless device of any preceding claim, wherein the wireless device comprises a wireless access point, AP, or a non-AP wireless station, STA, device.

11. The wireless device of any preceding claim, wherein the wireless device is a component of a multi-link device, MLD.

12. A method for wireless channel change detection, the method comprising:

at a wireless device, obtaining prior channel state information, CSI, and current CSI; and
at the wireless device, constructing a nulling matrix using the prior CSI and applying the nulling matrix to the current CSI to generate a perturbation index value that quantifies a wireless channel change.

13. The method of claim 12, wherein at the wireless device, constructing the nulling matrix using the prior CSI and applying the nulling matrix to the current CSI to generate the perturbation index value that quantifies the wireless channel change comprises constructing the nulling matrix using the prior CSI depending on a spatial domain configuration of the prior CSI.

14. The method of claim 12 or 13, wherein at the wireless device, constructing the nulling matrix using the prior CSI and applying the nulling matrix to the current CSI to generate the perturbation index value that quantifies the wireless channel change comprises constructing the nulling matrix using the prior CSI depending on whether the prior CSI is in frequency domain or in time domain.

FIG. 1

AP MLD
204

STA MLD
NON-AP MLD
208

AP1
206-1

LINK-1  202-1

STA1
210-1

AP2
206-2

LINK-2  202-2

STA2
210-2

FIG. 2

EP 4 648 363 A1

WIRELESS DEVICE

300

304 — CONTROLLER

302 — WIRELESS TRANSCEIVER

306-1

306-M

308

FIG. 3

```
                              ( START )
                                  │
                                  ▼
        ┌──────────────────────────────────────────────────────┐
402 ─┤  OBTAIN CHANNEL STATE INFORMATION AS REFERENCE, E.G., AT PRIOR TIME, │
        │  AND OBTAIN NEW CHANNEL STATE INFORMATION, E.G., AT CURRENT TIME │
        └──────────────────────────────────────────────────────┘
                                  │
                                  ▼
        ┌──────────────────────────────────────────────────────┐
404 ─┤        PREPROCESS CHANNEL STATE INFORMATION TO FIT THE         │
        │        INPUT FORMAT OF A PERTURBATION INDEX ALGORITHM         │
        └──────────────────────────────────────────────────────┘
                                  │
                                  ▼
        ┌──────────────────────────────────────────────────────┐
406 ─┤         COMPUTE A NULLING MATRIX USING THE REFERENCE CSI          │
        └──────────────────────────────────────────────────────┘
                                  │
                                  ▼
        ┌──────────────────────────────────────────────────────┐
408 ─┤             APPLY THE NULLING MATRIX TO THE NEW CSI            │
        │           AND COMPUTE THE PERTURBATION INDEX VALUE           │
        └──────────────────────────────────────────────────────┘
                                  │
                                  ▼
        ┌──────────────────────────────────────────────────────┐
410 ─┤        PERTURBATION INDEX USED FOR WIRELESS SENSING PURPOSE,      │
        │  E.G., PRESENCE/INTRUSION DETECTION, BREATHING DETECTION, ETC.  │
        └──────────────────────────────────────────────────────┘
```

# FIG. 4

| | |
|---|---|
| 502 | AT A WIRELESS DEVICE, OBTAIN PRIOR CHANNEL STATE INFORMATION (CSI) AND CURRENT CSI |
| 504 | AT THE WIRELESS DEVICE, CONSTRUCT A NULLING MATRIX USING THE PRIOR CSI AND APPLY THE NULLING MATRIX TO THE CURRENT CSI TO GENERATE A PERTURBATION INDEX VALUE THAT QUANTIFIES A WIRELESS CHANNEL CHANGE |

# FIG. 5

**EUROPEAN SEARCH REPORT**

Application Number

EP 25 17 4075

## DOCUMENTS CONSIDERED TO BE RELEVANT

| Category | Citation of document with indication, where appropriate, of relevant passages | Relevant to claim |
|---|---|---|
| X | US 2022/095950 A1 (CHENG XILIN [US] ET AL) 31 March 2022 (2022-03-31) <br> * paragraphs [0032], [0033], [0035], [0036] - [0039], [0068] * <br> * figures 1, 4 * <br> ----- | 1-14 |

**CLASSIFICATION OF THE APPLICATION (IPC)**

INV.
H04L25/02
H04W84/12

ADD.
H04B7/06

**TECHNICAL FIELDS SEARCHED (IPC)**

H04L
H04W
H04B

The present search report has been drawn up for all claims

| Place of search | Date of completion of the search | Examiner |
|---|---|---|
| Munich | 30 June 2025 | Franz, Stefan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................................
& : member of the same patent family, corresponding
   document

EPO FORM 1503 03.82 (P04C01)

EP 4 648 363 A1

## ANNEX TO THE EUROPEAN SEARCH REPORT
## ON EUROPEAN PATENT APPLICATION NO.

EP 25 17 4075

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | Publication date | Patent family member(s) | Publication date |
|---|---|---|---|
| US 2022095950 A1 | 31-03-2022 | NONE | |

EPO FORM P0459